# EUROPEAN PATENT SPECIFICATION

(11) **EP 1 686 023 B1**
(45) Date of publication and mention of the grant of the patent: **26.03.2008**
(21) Application number: 05250542.7
(22) Date of filing: 01.02.2005
(51) Int. Cl.: B60R 22/46

(54) **Vehicle safety restraint**
Sicherheitsrückhaltevorrichtung für Fahrzeuge
Ceinture de sécurité de véhicule

(43) Date of publication of application: 02.08.2006
(73) Proprietor: KEY SAFETY SYSTEMS, INC., Sterling Heights, MI 48314 (US)
(72) Inventor: Bell, John, Carlisle Cumbria, CA2 6QU (GB); Jack, Brian A., Eastriggs, Annan Dumfreshire DG12 6PR (GB)
(74) Representative: Freeman, Jacqueline Carol

(56) References cited:
- EP-A- 1 270 345
- WO-A-20/04076246

## Description

The present invention relates to a vehicle safety restraint mechanism such as a seat belt.

Traditionally a seat belt comprises a length of belt webbing connected at three points to load bearing parts of a vehicle. Typically one end is bolted to a door sill on one side of a seat, arranged to pass laterally across the hips of a vehicle occupant to a buckle mechanism fixed to the vehicle on the opposite side of the seat, and then diagonally across the torso of the vehicle occupant to a further fastening point on the 'B' pillar of the door. The buckle mechanism comprises a buckle tongue slidably attached to the webbing.

To increase comfort for the vehicle occupant restrained by the seat belt, a retractor is connected to the end of the webbing attached to the 'B' pillar. This allows the webbing to pay-out under relatively low loads to enable limited movement of the restrained vehicle occupant, for example to reach in-car entertainment controls or storage compartments. The retractor is biased to keep the webbing relatively taut about the vehicle occupant and a locking element is included to lock the retractor against webbing pay-out in the event of a dangerous situation being detected. For example, an acceleration sensor activates if the vehicle undergoes rapid acceleration or deceleration indicative of a crash.

In recent years, pretensioning devices have been included in seat belt mechanisms to rapidly pull in a length of webbing to actively tighten the belt about the vehicle occupant in the event of a crash being sensed. Such devices take up any slack which may have developed in the belt and help to more correctly position the vehicle occupant in the seat to maximise the effect of the belt protection and of any secondary safety restraint such as an airbag.

Pretensioning devices typically comprise a force reservoir such as a pyrotechnically operated gas generator to provide an impulse of sufficient magnitude to tighten the belt in a short space of time, ideally before the crash pulse takes full effect. A typical known pretensioning device may use rotational means to wind in a length of seat belt webbing, for example by rotating the retractor spool in a webbing rewind direction to take in the required length of webbing prior to the retractor locking against webbing pay-out.

A pretensioning device may also or alternatively tension the webbing by drawing in the webbing at another fixed point, for example that part of the webbing which is attached to the buckle or to the door sill of the vehicle. After pulling the webbing in a rearward direction it is locked in position. Using two pretensioning devices on separate webbing fixed points has the advantage of increased safety performance compared to a single pretensioning device but at an increased cost since it requires twice the number of pyrotechnic units and more electrical connections. Two pretensioning devices also take up a larger amount of space, and there is an increased safety risk since twice the volume of pyrotechnic material is used.

WO2004/076246 describes a belt tightening device with a retractor at one end of the belt and a tightening device at the other end both driven simultaneously.

The present invention aims to provide an improved seat belt safety restraint for use in vehicle safety applications.

According to the present invention there is provided a seat belt safety restraint for a vehicle comprising a length of seat belt webbing arranged to pass across a vehicle occupant to restrain forward motion of the vehicle occupant in a crash, the webbing length having a first end and a second end each arranged to be connected to load bearing parts of the vehicle, means for tightening the webbing across the vehicle occupant in a crash, a force reservoir arranged to activate the tightening means in response to a crash being detected, wherein the tightening means comprises: first means for moving the first end of the webbing length in a belt tightening direction, second means for moving the second end of the webbing length in a belt tightening direction, and wherein the first and the second means for moving are arranged to be simultaneously activated by a single force reservoir, further comprising a seat belt retractor having a spool on which the first end of the webbing is wound, wherein the first moving means is arranged, when activated, to rotate the spool in a belt tightening direction, and characterised in that the tightening means comprises a piston-cylinder assembly comprising a piston arranged to move along a cylinder under force supplied from the force reservoir to tighten the webbing.

Such a restraint pulls in the webbing at two points rather than just one, thereby making the restraint safer in a crash because the pretensioning effect can be implemented faster and more effectively. Using only one force reservoir advantageously reduces the number of components and hence the cost.

In one embodiment the piston-cylinder assembly is fixed adjacent to one end of the spool of the retractor in such a manner that when the piston moves along the cylinder it directly engages the outer circumference of a hub of the spool to drive it in a webbing tightening direction. In this embodiment both the piston-cylinder assembly and the retractor must be mounted to the same load bearing part of the vehicle.

In an alternative arrangement the piston-cylinder assembly is coupled to the spool of the retractor by a cable in such a manner that when the piston moves along the cylinder it pulls the cable to rotate the spool in a webbing tightening direction. In this embodiment the piston-cylinder assembly and the retractor can be mounted to two different load bearing parts of a vehicle.
The piston-cylinder assembly may be coupled to the second end of the webbing by a cable so that when the piston moves along the cylinder, the piston pulls the cable and the cable pulls the second webbing end in a belt tightening direction.

In one embodiment of the invention the tightening means comprises a first piston-cylinder assembly connected to move the first end of the webbing length in a belt tightening direction, and a second piston-cylinder assembly connected to move the second end of the webbing length in a belt tightening direction.

In a further embodiment, the first piston is arranged to engage the hub of the retractor spool and the second piston is arranged to engage a drive wheel connected by a cable to the second end of the webbing so that when the second piston travels along the second cylinder it engages the drive wheel and causes it to rotate in a direction which winds the cable onto the drive wheel and pulls the second end of the webbing in a tightening direction.

Preferably, the invention includes means for locking at least one of the first and the second end of the webbing length against movement in a webbing untightening direction, in particular a linear locking mechanism. The linear locking mechanism is arranged to move freely in one direction but arranged to resist movement in the opposite direction. This advantageously prevents the webbing from untightening after pretensioning, thereby holding the vehicle occupant in the safer pretensioned position during the whole crash pulse.

In a preferred embodiment of the invention the force reservoir comprises a gas generator which is pyrotechnically activated. These gas generators are well known and have proven effectiveness.

For a better understanding of the present invention, and to show how the same may be carried into effect, reference will now be made, by way of example, to the accompanying drawings, in which:
Figure 1 is a schematic front view of a seat belt safety restraint according to a first embodiment of the present invention.
Figure 2 is a schematic front view of a seat belt safety restraint according to a second embodiment of the present invention.
Figure 3 is a schematic front view of a seat belt safety restraint according to the second embodiment of the present invention after pretensioning.
Figure 4 is a schematic front view of a seat belt safety restraint according to a third embodiment of the present invention.
Figure 5 is a schematic front view of a seat belt safety restraint according to a fourth embodiment of the present invention.

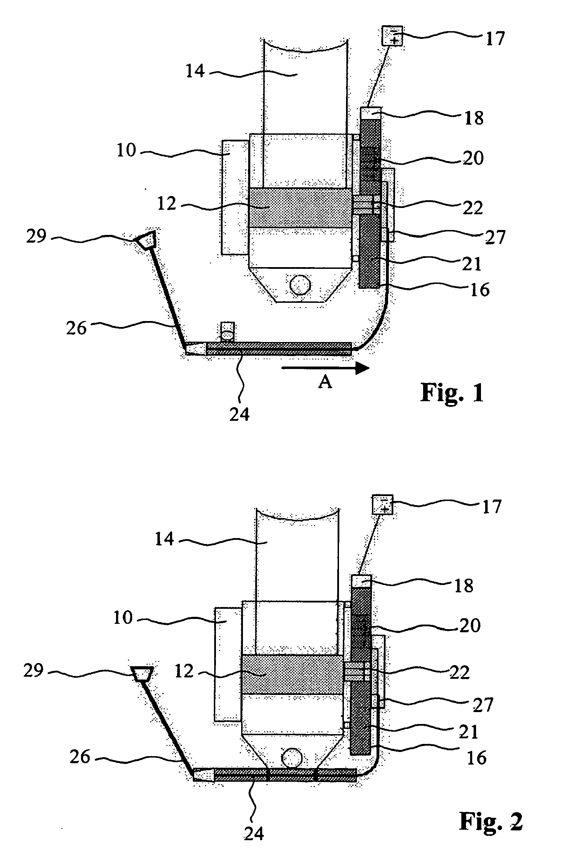

In figure 1, a retractor 10 is positioned adjacent to a seat of a vehicle (not shown), mounted to a load bearing part of the vehicle such as a vehicle side pillar, particularly the 'B' pillar (not shown).

The retractor 10 comprises a webbing spool 12 to which one end of a length of seat belt webbing 14 is attached. Locking means of known form restricts the payout of the webbing 14 over a predetermined rotational acceleration limit. The webbing 14 passes, in known manner, from the retractor 10, up the 'B' pillar, through a shoulder support (not shown) also attached to the side pillar and has a buckle tongue, which is insertable into a buckle (not shown) located on the other side of the seat. In use, the webbing 14 then passes back across the lap of a vehicle occupant and is fixed to another load bearing part of the vehicle, for example at the sill between the seat and its adjacent door.

A pyrotechnic unit 16, comprising a gas generator 18 and a piston rack 20 mounted with a cylindrical housing 21, is attached to the retractor 10. The piston rack 20 is arranged to travel along the cylindrical housing 21, driven by the force from the gas generator 18 when it is activated by the initiator 17. The housing 21 is arranged so that the piston rack 20 passes adjacent the outer circumference of the drive wheel 22 and engages the circumferential surface to rotate it. This causes rotation of the spool 12, for example by engagement of a clutch mechanism, in known manner, and causes the webbing to be wound onto the spool 12. To achieve effective engagement the piston 20 and/or the drive wheel surface may be toothed or roughened to ensure frictional engagement.

At a first end 27, cable 26 is attached to the drive wheel 22 which is normally rotationally fixed. A second end 29 of the cable 26 is attached to a second end of the seat belt webbing (not shown).

A locking mechanism 24 of known design, such as a linear locking mechanism, is arranged to enable the cable 26 only to move in a rearward direction as shown by arrow A. The locking mechanism 24 may be positioned adjacent to the seat of the vehicle, mounted to a load bearing part of the vehicle such as a door sill (not shown), or may be fixed close to the retractor 10 as shown in figure 2.

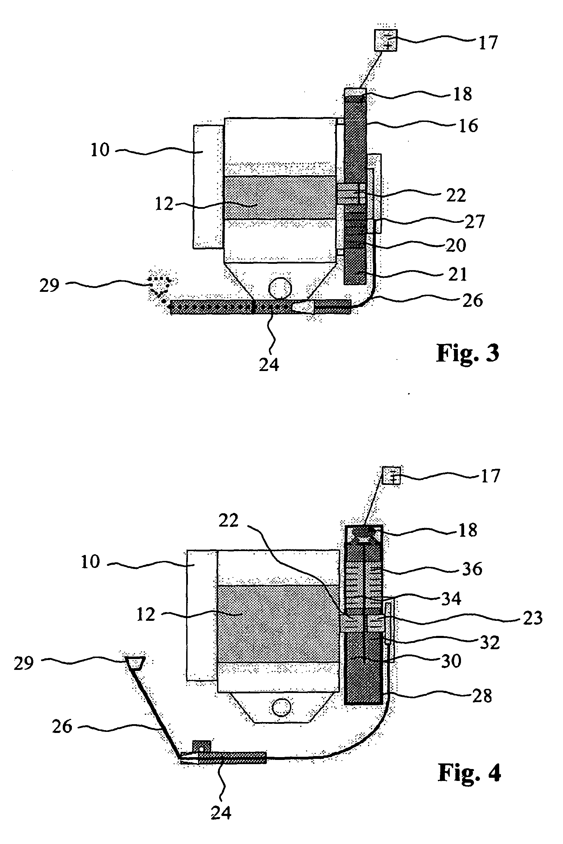

When an acceleration or deceleration of the vehicle, above a predetermined threshold is detected, a crash sensor, in known manner, generates a signal indicative of a crash, which causes the initiator 17 to activate the gas generator 18 forcing the piston rack 20 along the cylindrical housing 21, rotating the drive wheel 22 and thus the webbing spool 12. Figure 3 illustrates the device according to the second embodiment after pretensioning. The locking mechanism 24 maintains the webbing tension by preventing cable payout in an untightening direction.

Figure 4 illustrates a third embodiment of the present invention wherein the pyrotechnic unit 28 comprises two chambers 30, 32, each with a respective piston rack 34, 36, both of which are driven along the respective chambers 30, 32 by the force from a single gas generator 18, in response to a signal at the initiator 17, indicative of a crash. The first piston rack 34 is arranged to rotate the webbing spool 12 attached to the first end of the webbing (not shown) in a tightening direction via a first drive wheel 22, and the second piston rack 36 is arranged to rotate a second drive wheel 23 thereby pulling in the cable 26 attached to the second end of the webbing (not shown). Thus the pyrotechnic unit 28 simultaneously tightens two ends of the webbing, thereby enhancing the performance of the seat belt safety device and assisting the phasing of the webbing tensioning.

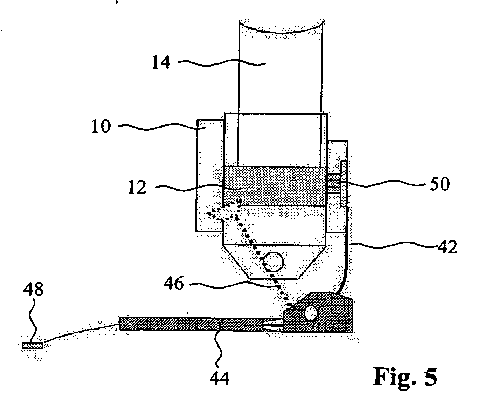

Figure 5 illustrates a fourth embodiment of the present invention, wherein a pyrotechnic unit 44 incorporating a locking mechanism is shown located a distance from the retractor 10 and coupled to it by a cable. The retractor 10 comprising the webbing spool 12 attached to a first end of the webbing 14, comprises a clutch mechanism 50 arranged to engage when a crash is sensed and the pyrotechnic unit 44 is activated to rotate the spool 12 in a tensioning direction. A first cable 42 is connected at a first end to the webbing spool 12 via the clutch mechanism 50, and connected at a second end to a piston 38 arranged to move along a tube of the pyrotechnic unit 44. A second cable 46 is connected at a first end to the piston of the pyrotechnic unit 44, and connected at a second end to the second end (lap sill end) of the seat belt webbing. Upon sensing an acceleration or deceleration of the vehicle above a predetermined threshold, a crash sensor, in known manner, generates a signal indicative of a crash and provides a signal to the electrical connector 48, which causes the pyrotechnic unit 44 to fire and moves the piston 38 along the tube. The activated pyrotechnic unit 44 pulls in both cables 42, 46. The movement of the first cable 42 forces the clutch mechanism 50 to engage, thereby rotating the spool 12 and tensioning the webbing 14. The movement of the second cable 46 results in the tensioning of the second end of the webbing, as described in previous embodiments.

## Claims

1. A seat belt safety restraint for a vehicle comprising:
a length of seat belt webbing arranged to pass across a vehicle occupant to restrain forward motion of the vehicle occupant in a crash, the webbing length having a first end (14) and a second end each arranged to be connected to load bearing parts of the vehicle;
means for tightening the webbing across the vehicle occupant in a crash;
a force reservoir (18) arranged to activate the tightening means in response to a crash being detected;
wherein the tightening means comprises:
first means for moving the first end of the webbing length (14) in a belt tightening direction;
second means for moving the second end of the webbing length in a belt tightening direction, and
wherein the first and the second means for moving are arranged to be simultaneously activated by a single force reservoir (18),
further comprising a seat belt retractor (10) having a spool (12) on which the first end of the webbing (14) is wound, wherein the first moving means is arranged, when activated, to rotate the spool (12) in a belt tightening direction, and
**characterised in that** the tightening means comprises a piston-cylinder assembly (16;44) comprising a piston (20) arranged to move along a cylinder (21) under force supplied from the force reservoir (18) to tighten the webbing.

2. A restraint according to claim 1 wherein the piston-cylinder (16:28) assembly is fixed adjacent to one end of the spool (12) of the retractor (10) in such a manner that when the piston (20;34) moves along the cylinder (21;30) it directly engages the outer circumference of a hub of the spool (22) to drive it in a webbing tightening direction.

3. A restraint according to claim 1 wherein the piston-cylinder assembly (44) is coupled to the spool (12) of the retractor (10) by a cable (42) in such a manner that when the piston moves along the cylinder it pulls the cable (42) to rotate the spool (12) in a webbing tightening direction.

4. A restraint according to any one of claims 1, 2 or 3 wherein the piston-cylinder assembly (16;28;44) is coupled to the second end of the webbing by a cable (26;46) so that when the piston (20;36) moves along the cylinder (21;32), the piston (20;36) pulls the cable (26;46) and the cable (26;46) pulls the second webbing end in a belt tightening direction.

5. A restraint according to claim 1 wherein the tightening means comprises a first piston-cylinder assembly connected to move the first end of the webbing length (14) in a belt tightening direction, and a second piston-cylinder assembly connected to move the second end of the webbing length in a belt tightening direction.

6. A restraint according to claim 4 or 5 wherein the first piston (34) is arranged to engage a hub of the retractor spool (22) and the second piston (36) is arranged to engage a drive wheel (23) connected by a cable (26) to the second end of the webbing so that when the second piston (36) travels along the second cylinder (32) it engages the drive wheel (23) and causes it to rotate in a direction which winds the cable (26) onto the drive wheel (23) and pulls the second end of the webbing in a tightening direction.

7. A restraint according to any one of the preceding claims further comprising means for locking (24) at least one of the first (14) and the second ends of the webbing length against movement in a webbing untightening direction.

8. A restraint according to claim 7 wherein the locking means (24) comprises a linear locking mechanism arranged to move freely in one direction but arranged to resist movement in the opposite direction.

9. A restraint according to any one of the preceding claims wherein the force reservoir (18) comprises a gas generator which is pyrotechnically activated.

## Patentansprüche

1. Sicherheitsgurtrückhaltevorrichtung für ein Fahrzeug, umfassend:
ein Stück Sicherheitsgurtband, das so angeordnet ist, dass es über einen Fahrzeuginsassen verläuft, um die Vorwärtsbewegung des Fahrzeuginsassen bei einer Kollision zurückzuhalten, wobei das Gurtbandstück ein erstes Ende (14) und ein zweites Ende hat, die jeweils zum Verbinden mit tragenden Teilen des Fahrzeugs angeordnet sind;
ein Mittel zum Spannen des Gurtbands über den Fahrzeuginsassen bei einer Kollision;
einen Kraftspeicher (18), der zum Aktivieren des Mittels zum Spannen als Reaktion auf das Erkennen einer Kollision angeordnet ist;
wobei das Mittel zum Spannen Folgendes umfasst:
ein erstes Mittel zum Bewegen des ersten Endes des Gurtbandstücks (14) in einer Gurtspannrichtung;
ein zweites Mittel zum Bewegen des zweiten Endes des Gurtbandstücks in einer Gurtspannrichtung und
wobei das erste und das zweite Mittel zum Bewegen angeordnet sind, um gleichzeitig von einem einzelnen Kraftspeicher (18) aktiviert zu werden,
ferner umfassend einen Sicherheitsgurtaufroller (10) mit einer Spule (12), auf die das erste Ende des Gurtbands (14) aufgewickelt wird, wobei das erste Mittel zum Bewegen angeordnet ist, um, wenn es aktiviert wird, die Spule (12) in einer Gurtspannrichtung zu drehen, und
**dadurch gekennzeichnet, dass** das Mittel zum Spannen eine Kolben-Zylinder-Baugruppe (16; 44) umfasst, die einen Kolben (20) umfasst, der zum Bewegen entlang einem Zylinder (21) unter aus dem Kraftspeicher (18) zugeführter Kraft zum Spannen des Gurtbands angeordnet ist.

2. Rückhaltevorrichtung nach Anspruch 1, bei der die Kolben-Zylinder-(16; 28)-Baugruppe neben einem Ende der Spule (12) des Aufrollers (10) so befestigt ist, dass der Kolben (20; 34) wenn er sich am Zylinder (21; 30) entlang bewegt, direkt mit dem Außenumfang einer Nabe der Spule (22) in Eingriff kommt, um sie in einer Gurtbandspannrichtung anzutreiben.

3. Rückhaltevorrichtung nach Anspruch 1, bei der die Kolben-Zylinder-Baugruppe (44) durch einen Seilzug (42) so mit der Spule (12) des Aufrollers (10) verbunden ist, dass der Kolben, wenn er sich am Zylinder entlang bewegt, den Seilzug (42) zieht, um die Spule (12) in einer Gurtspannrichtung zu drehen.

4. Rückhaltevorrichtung nach einem der Ansprüche 1, 2 oder 3, bei der die Kolben-Zylinder-Baugruppe (16; 28; 44) durch einen Seilzug (26; 46) so mit dem zweiten Ende des Gurtbands verbunden ist, dass der Kolben (20; 36), wenn sich der Kolben (20; 36) am Zylinder (21; 32) entlang bewegt, den Seilzug (26; 46) zieht und der Seilzug (26; 46) das zweite Gurtbandende in einer Gurtspannrichtung zieht.

5. Rückhaltevorrichtung nach Anspruch 1, bei der das Mittel zum Spannen eine erste Kolben-Zylinder-Baugruppe, die zum Bewegen des ersten Endes des Gurtbandstücks (14) in einer Gurtspannrichtung angeschlossen ist, und eine zweite Kolben-Zylinder-Baugruppe, die zum Bewegen des zweiten Endes des Gurtbandstücks in einer Gurtspannrichtung angeschlossen ist, umfasst.

6. Rückhaltevorrichtung nach Anspruch 4 oder 5, bei der der erste Kolben (34) zum Ineingriffkommen mit einer Nabe der Aufrollerspule (22) angeordnet ist und der zweite Kolben (36) zum Ineingriffkommen mit einem Antriebsrad (23) angeordnet ist, das durch einen Seilzug (26) mit dem zweiten Ende des Gurtbands verbunden ist, so dass der zweite Kolben (36), wenn er sich am zweiten Zylinder (32) entlang bewegt, mit dem Antriebsrad (23) in Eingriff kommt und bewirkt, dass es sich in einer Richtung dreht, die den Seilzug (26) auf das Antriebsrad (23) aufwickelt und das zweite Ende des Gurtbands in einer Spannrichtung zieht.

7. Rückhaltevorrichtung nach einem der vorhergehenden Ansprüche, die ferner ein Mittel zum Arretieren (24) des ersten (14) und/oder des zweiten Endes des Gurtbandstücks gegen Bewegung in einer Gurtentspannrichtung umfasst.

8. Rückhaltevorrichtung nach Anspruch 7, bei der das Mittel zum Arretieren (24) einen linearen Blockiermechanismus umfasst, der zur freien Bewegung in einer Richtung angeordnet ist, aber so angeordnet ist, dass er Bewegung in der entgegengesetzten Richtung widersteht.

9. Rückhaltevorrichtung nach einem der vorhergehenden Ansprüche, bei der der Kraftspeicher (18) einen Gasgenerator umfasst, der pyrotechnisch aktiviert wird.

## Revendications

1. Dispositif de retenue par ceinture de sécurité pour un véhicule comprenant :
une longueur de sangle de la ceinture de sécurité agencée de sorte à passer sur un occupant du véhicule pour limiter le déplacement vers l'avant de l'occupant du véhicule lors d'une collision, la longueur de la sangle comportant une première extrémité (14) et une deuxième extrémité, chacune étant agencée de sorte à être connectée à des parties de support de la charge du véhicule ;
un moyen pour tendre la sangle sur l'occupant du véhicule en cas d'une collision ;
un réservoir de force (18) agencé de sorte à actionner le moyen de tension en réponse à la détection d'une collision ;
le moyen de tension comprenant :
un premier moyen pour déplacer la première extrémité de la longueur de la sangle (14) dans une direction de tension de la ceinture ;
un deuxième moyen pour déplacer la deuxième extrémité de la longueur de la sangle dans une direction de tension de la ceinture ; et
les premier et deuxième moyens de déplacement étant agencés de sorte à être actionnés de manière simultanée par un seul réservoir de force (18) ;
comprenant en outre un enrouleur de la ceinture de sécurité (10) comportant une bobine (32) sur laquelle est enroulée la première extrémité de la sangle (14), le premier moyen de déplacement étant agencé, lors de son actionnement, de sorte à faire tourner la bobine (12) dans une direction de tension de la ceinture ; et
**caractérisé en ce que** le moyen de tension comprend un assemblage à piston et cylindre (16 ; 44), comprenant un piston (20) destiné à se déplacer le long d'un cylindre (21) en présence de la force appliquée à partir du réservoir de force (18) pour tendre la sangle.

2. Dispositif de retenue selon la revendication 1, dans lequel l'assemblage à piston et cylindre (16 ; 28) est fixé près d'une extrémité de la bobine (12) de l'enrouleur (10), de sorte que lorsque le piston (20 ; 34) se déplace le long du cylindre (21 ; 30), il s'engage directement dans la circonférence externe d'un moyeu de la bobine (22) pour l'entraîner dans une direction de tension de la sangle.

3. Dispositif de retenue selon la revendication 1, dans lequel l'assemblage à piston et cylindre (44) est accouplé à la bobine (12) de l'enrouleur (10) par un câble (42), de sorte que lorsque le piston se déplace le long du cylindre, il exerce une traction sur le câble (42) pour faire tourner la bobine (12) dans une direction de tension de la sangle.

4. Dispositif de retenue selon l'une quelconque des revendications 1, 2 ou 3, dans lequel l'assemblage à piston et cylindre (16 ; 28 ; 44) est accouplé à la deuxième extrémité de la sangle par un câble (26 ; 46), de sorte que lorsque le piston (20 ; 36) se déplace le long du cylindre (21 ; 32), le piston (20 ; 36) exerce une traction sur le câble (26 ; 46), le câble (26 ; 46) entraînant la deuxième extrémité de la sangle dans une direction de tension de la ceinture.

5. Dispositif de retenue selon la revendication 1, dans lequel le moyen de tension comprend un premier assemblage à piston et cylindre, connecté de sorte à déplacer la première extrémité de la longueur de la sangle (14) dans une direction de tension de la ceinture, et un deuxième assemblage à piston et cylindre connecté de sorte à déplacer la deuxième extrémité de la longueur de la sangle dans une direction de tension de la ceinture.

6. Dispositif de retenue selon les revendications 4 ou 5, dans lequel le premier piston (34) est agencé de sorte à s'engager dans un moyeu de la bobine de l'enrouleur (22), le deuxième piston (36) étant agencé de sorte à s'engager dans une roue d'entraînement (23) connectée par un câble (26) à la deuxième extrémité de la sangle, de sorte que lorsque le deuxième piston (36) se déplace le long du deuxième cylindre (32), il s'engage dans la roue d'entraînement (23) et entraîne sa rotation dans une direction enroulant le câble (26) sur la roue d'entraînement (23) et entraînant la deuxième extrémité de la sangle dans une direction de tension.

7. Dispositif de retenue selon l'une quelconque des revendications précédentes, comprenant en outre un moyen pour verrouiller (24) au moins une des première (14) et deuxième extrémités de la longueur de la sangle contre un déplacement dans une direction de desserrage de la sangle.

8. Dispositif de retenue selon la revendication 7, dans lequel le moyen de verrouillage (24) comprend un mécanisme de verrouillage linéaire agencé de sorte à se déplacer librement dans une direction, mais à résister au déplacement dans la direction opposée.

9. Dispositif de retenue selon l'une quelconque des revendications précédentes, dans lequel le réservoir de force (18) comprend un générateur de gaz à actionnement pyrotechnique.
